# NEW EUROPEAN PATENT SPECIFICATION

(11) **EP 2 910 772 B2**
(45) Date of publication and mention of the opposition decision: **19.08.2020**
(45) Mention of the grant of the patent: 27.09.2017
(21) Application number: 15156020.8
(22) Date of filing: 20.02.2015
(51) Int. Cl.: F03D 1/06

(54) **WIND TURBINE BLADE, WIND TURBINE ROTOR AND WIND TURBINE GENERATOR SYSTEM**
WINDTURBINENSCHAUFEL, WINDTURBINENROTOR UND WINDTURBINENGENERATORSYSTEM
PALE D'ÉOLIENNE, ROTOR D'ÉOLIENNE ET SYSTÈME DE GÉNÉRATEUR D'ÉOLIENNE

(30) Priority: 21.02.2014 JP 2014031213
(43) Date of publication of application: 26.08.2015
(73) Proprietor: MITSUBISHI HEAVY INDUSTRIES, LTD., Tokyo 108-8215 (JP)
(72) Inventor: Fukami, Koji, Tokyo, 108-8215 (JP)
(74) Representative: Cabinet Beau de Loménie

(56) References cited:
- EP-A1- 0 675 285
- EP-A1- 2 604 856
- US-A1- 2009 123 289
- US-A1- 2010 303 632
- "Innovative Design Approaches for Large Wind Turbine Blades", Sandia Report, 2003, pages 1-47,
- Van Dam et al: "Computational Design and Analysis of Flat Back Airfoil Wind Tunnel Experiment", Sandia Report, - 2008, pages 1-41,
- "Innovative Design Approaches for Large Wind Turbine Blades, Final Report", Sandia Report, 2004, pages 1-54,
- Mehdi Doosltalab et al: "Effects of the Design Parameters on the Multidisciplinary Optimization of Flatback Airfoils for Large Wind Turbine Blades
- Standish K.J. et al: "Aerodynamic Analysis of Blunt Trailing Edge Airfoils", Journal of Solar Energy Engineering, November 2003
- Wind Energy - The Facts. Part 1. Technology

## Description

### TECHNICAL FIELD

The present disclosure relates to a wind turbine blade, a wind turbine rotor, and a wind turbine generator system.

### BACKGROUND

Wind turbine generator systems using wind power have become widely used in recent years in view of preservation of the global environment. A wind turbine generator system converts kinetic energy of wind into rotational energy of a wind turbine rotor including wind turbine blades and a hub, and further converts this rotational energy into electric power in a generator.

In such a wind turbine generator system, a wind turbine rotor has a function of converting kinetic energy of wind into rotational energy, and a widely-used wind turbine rotor includes a plurality of blades attached radially to a hub. To improve efficiency (blade efficiency) of the entire wind turbine rotor, various airfoils have been proposed in the past.

For instance, Patent Document 1 discloses an airfoil having the maximum blade thickness in a range where the distance from a leading edge along the chord length is 20% to 30%. Further, Patent Document 2 discloses a configuration in which a representative blade thickness ratio is 24% in the blade root region, another representative blade thickness ratio is 21% in the blade end region, and yet another representative blade thickness ratio is 16% in the blade tip region. Further, Patent Document 3 discloses an airfoil in which the design lift coefficient is set within a range of from 1.10 to 1.25 in a range where the blade thickness ratio is from 14% to 45%.

Document US2009123289, which is considered to be the closest prior art shows a profile choice (S830) for the blade root area of a large blade wind turbine with a rotor diameter of about 100 meters.

### Citation List

### Patent Literature

Patent Document 1: EP1760310A
Patent Document 2: EP0675285A
Patent Document 3: EP1152148A

### SUMMARY

Meanwhile, wind turbine generator systems recently tend to increase in size to improve the applicability to the markets of regions with low wind speed and to increase capacity for enhancement of the economic efficiency, which leads to an increase in the length of the wind turbine blades corresponding to the increased rotor diameter. To increase the blade length while maintaining the aerodynamic performance of the wind turbine blades, the shape of the wind turbine blades may be maintained to be similar when increasing the size of the wind turbine blades.

However, simply increasing the size of the wind turbine blades may lead to a remarkable weight increase of the wind turbine blades, deterioration in the manufacturability of the wind turbine blades (such as a decrease in the performance of impregnating a shaping mold with resin), deterioration in the transportability of the wind turbine blades (limitation on the transportability due to the maximum width, i.e. the maximum chord length, of the wind turbine blades), and deterioration in the operability of the wind turbine generator system (necessity to prevent interference of the blades with the tower and the nacelle when controlling the pitch of the blades). The influence of the above issues becomes more serious as the maximum chord length of the wind turbine blades increases.

Therefore, it is necessary to set a limitation on the maximum chord length when increasing the length of the wind turbine blades.

To achieve the optimum aerodynamic performance, however, it is necessary to bring the chord length closer to an optimum size which has an inversely proportional relationship with the product of a radial position and a design lift coefficient. Thus, if a limitation is set on the maximum chord length as described above, the chord length may become shorter than the optimum chord length, which may degrade the aerodynamic performance.

Thus, in view of the recent trend of the increasing blade length of the wind turbine blades, it is hard to say that the conventional wind turbine blades described in Patent Documents 1 to 3, for instance, have an adequate design lift coefficient in a spanwise region near the position of the maximum chord length. Therefore, it is desirable to increase the design lift coefficient even further in the above region.

In view of the above issues, an object of at least some embodiments of the present invention is to provide a wind turbine rotor and a wind turbine generator system which are capable of achieving a high design lift coefficient in a spanwise region near the position of the maximum chord length.

The present invention provides a wind turbine rotor which is defined in appended claim 1. The wind turbine rotor comprises a plurality of wind turbine blades each including a suction surface and a pressure surface arranged opposite to each other, and a hub to which each of the plurality of wind turbine blades is mounted. In a spanwise region of each of the wind turbine blades where a ratio of a radial position r of the wind turbine rotor to a radius R of the wind turbine rotor is not less than 0.1 and not more than 0.4, each of the wind turbine blades includes an airfoil having a first dimensionless value yₘₐₓ/tₘₐₓ of not less than 0.4 and not more than 0.46 and a second dimensionless value y_{f}/yₘₐₓ of not less than 0.63 and not more than 0.71. The first dimensionless value yₘₐₓ/tₘₐₓ is a ratio of a maximum upper (suction-side) thickness yₘₐₓ being a maximum value of a distance between a chord and the suction surface to a maximum blade thickness tₘₐₓ being a maximum value of a distance between the suction surface and the pressure surface. The second dimensionless value y_{f}/yₘₐₓ is a ratio of a upper (suction-side) thickness y_{f} to the maximum upper (suction-side) thickness yₘₐₓ. The upper (suction-side) thickness y_{f} is a distance between the chord and the suction surface at a position in the chord direction at a distance of 0.3 xₘₐₓ from a leading edge when defining a position in the chord direction having the maximum upper (suction-side) thickness yₘₐₓ as being at a distance xₘₐₓ between the leading edge and the position in the chord direction having the maximum upper (suction-side) thickness yₘₐₓ.

As a result of intense researches, the present inventors found that the airfoil satisfying the above conditions related to the first and second dimensionless values has a high design lift coefficient. The above wind turbine blade is based on such findings of the present inventors, and the airfoil is configured to improve the aerodynamic performance of the wind turbine blade.

That is, in the airfoil of the wind turbine blade, the ratio of the maximum upper (suction-side) thickness yₘₐₓ to the maximum blade thickness, which is the first dimensionless value, is set to 0.46 or less to restrict the overall bulge of the airfoil toward the suction surface, while the ratio of the upper (suction-side) thickness y_{f} to the maximum upper (suction-side) thickness yₘₐₓ, which is the second dimensionless value, is set to 0.76 or less to restrict the local (in a range of from the leading edge to xₘₐₓ) bulge toward the suction surface at the leading edge side of the airfoil. As described above, since the overall bulge of the suction surface and the local bulge of the suction-surface shape at the leading edge side are restricted, development of a boundary layer (a thickness in a direction normal to the blade surface in a region in the vicinity of the blade surface where the flow speed is low) along the suction surface is retarded, which restricts separation from the suction surface at the trailing edge side (trailing edge separation), thereby improving the lift. Thus, it is possible to achieve a high design lift coefficient with the above airfoil.

Moreover, in the airfoil of the above wind turbine blades, the ratio of the maximum upper (suction-side) thickness yₘₐₓ to the maximum blade thickness, which is the first dimensionless value, is set to 0.36 or more to ensure the overall bulge of the airfoil toward the suction surface to a certain extent, while the ratio of the upper (suction-side) thickness y_{f} to the maximum upper (suction-side) thickness yₘₐₓ, which is the second dimensionless value, is set to 0.62 or more to ensure the local (in a range of from the leading edge to xₘₐₓ) bulge toward the suction surface at the leading edge side of the airfoil to a certain extent. As described above, ensuring the overall bulge of the suction surface and the local bulge of the suction-surface shape at the leading edge side makes it possible to restrict reduction of the lift caused by the influence from the separation immediately downstream the stagnation point (leading edge separation).

Accordingly, the airfoil of the wind turbine blade satisfies the above conditions related to the first and second dimensionless values, and thus has a high design lift coefficient.

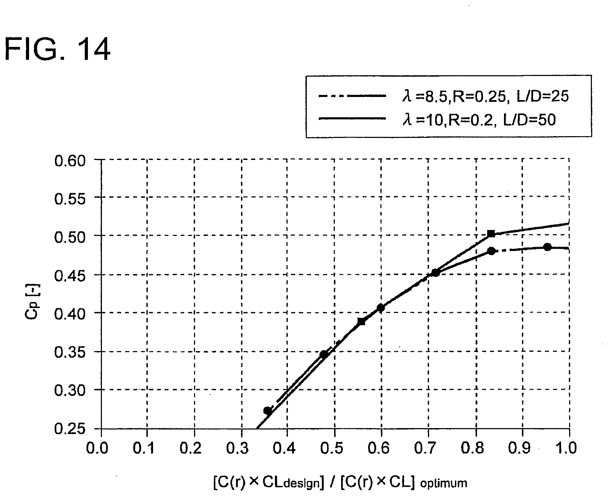

Here, in the spanwise region where a ratio of the radial position r of the wind turbine rotor to the radius R of the wind turbine rotor is not less than 0.1 and not more than 0.4, limitations are likely to be set on the chord length for the various reasons described above. As a result, the aerodynamic performance normally decreases unless the design lift coefficient is increased. That is, unless the shortage of the chord length with respect to the optimum chord length is made up by improving the design lift coefficient, a gap from the optimum value of a product of the chord length and the lift coefficient at each radial position becomes large, which makes it difficult to achieve high blade efficiency (power coefficient). FIG. 14 is a graph of a relationship between a power coefficient Cₚ and a dimensionless optimum value of a product of the chord length and the lift coefficient. In the drawing, λ is the tip speed ratio, R is the dimensionless radial position, L/D is the lift-drag ratio, C(r) is the chord length at a certain radial position, CL_{design} is the design lift coefficient, CL is the lift coefficient, [C(r)×CL]ₒₚₜᵢₘᵤₘ is the optimum value of a product of the chord length and the lift coefficient, and Cₚ is the power coefficient. As illustrated in the drawing, when there is a large gap from the optimum value of a product of the chord length and the lift coefficient, the power coefficient Cₚ is small regardless of the size of the lift-drag ratio (L/D). The lift-drag ratio (L/D) begins to have a substantial influence on the power coefficient Cₚ only when the product of the chord length and the lift coefficient approaches the optimum value adequately. As described above, when the chord length is shorter than the optimum chord length, it is important to reduce the gap from the optimum value of the product of the chord length and the lift coefficient by compensating for the shortage of the chord length with the design lift coefficient instead of the lift-drag ratio (L/D).

In this regard, when the wind turbine blade includes the airfoil having a high design lift coefficient in the spanwise region, it is possible to increase the design lift coefficient in a region in the vicinity of the position in the chord direction where the above airfoil is employed, which makes it possible to improve the aerodynamic performance of the wind turbine blade.

The first dimensionless value yₘₐₓ/tₘₐₓ is not less than 0.4 and not more than 0.46, and the second dimensionless value y_{f}/yₘₐₓ is not less than 0.63 and not more than 0.71. Further, in one embodiment, the second dimensionless value y_{f}/yₘₐₓ is not less than 0.65 and not more than 0.69.

With the first and second dimensionless values set in the above range of values, the overall bulge of the suction surface and the local bulge of the suction-surface shape at the leading edge side become even more preferable, thereby effectively restricting the trailing edge separation and the leading edge separation, which makes it possible to increase the design lift coefficient of the airfoil.

In some embodiments, the airfoil is a flat-back airfoil which includes a trailing edge having a thickness.

As described above, with the airfoil being a flat-back airfoil in which the trailing edge has a thickness in a region relatively close to the blade root portion side, it is possible to avoid a decrease in the speed until achieving a high attack angle to improve the maximum lift coefficient. That is, with the airfoil being a flat-back airfoil in the spanwise region where the ratio of the radial position r is not less than 0.1 and not more than 0.4, it is possible to retard the separation of the boundary layer on the suction surface effectively thanks to the negative pressure produced by a wake at the downstream side of the trailing edge.

In some embodiments, the airfoil of the wind turbine blade has a blade thickness ratio of not less than 0.35 and not more than 0.8 indicating a proportion of the maximum blade thickness tₘₐₓ to a length C of the chord.

The wind turbine rotor includes a hub to which the wind turbine blade is mounted.

Since the wind turbine rotor includes the wind turbine blade having the airfoil with a high design lift coefficient in the spanwise region, it is possible to increase the design lift coefficient in a region in the vicinity of the position in the chord direction where the wind turbine blade has the above airfoil, which contributes to improvement of the aerodynamic performance of the wind turbine blade and eventually improvement of the aerodynamic performance of the wind turbine rotor.

The diameter of the wind turbine rotor is not less than 100m.

As described above, since the wind turbine rotor includes the above airfoil, it is possible to shorten the maximum chord length without reducing the aerodynamic performance of the wind turbine blade by a considerable amount even if the wind turbine blade is large having a wind turbine rotor of not less than 100m in diameter. That is, it is possible to compensate for the deterioration of the aerodynamic performance caused by the shortened chord length of the wind turbine blade by increasing the design lift coefficient of the airfoil included in the wind turbine blade.

A wind turbine generator system according to some embodiments of the present invention includes the above wind turbine rotor and a generator for converting rotation energy of the wind turbine rotor into electric energy.

The above wind turbine generator system includes a wind turbine rotor, and this wind turbine rotor has the airfoil with a high design lift coefficient in the spanwise region. Thus, it is possible to increase the design lift coefficient in a region in the vicinity of the position in the chord direction where the above airfoil is employed, which contributes to improvement of the aerodynamic performance of the wind turbine blade and eventually improvement of the aerodynamic performance of the wind turbine rotor.

According to the present invention, the airfoil of the wind turbine blade satisfies the above conditions related to the first and second dimensionless values, which makes it possible to achieve a high design lift coefficient. When the wind turbine blade has the airfoil with a high design lift coefficient in the above spanwise region, it is possible to increase the design lift coefficient in a region in the vicinity of the position in the chord direction where the above airfoil is employed, which makes it possible to improve the aerodynamic performance of the wind turbine blade.

### BRIEF DESCRIPTION OF DRAWINGS

FIG. 1 is a schematic configuration diagram illustrating a wind turbine generator system according to some embodiments.
FIG. 2 is a schematic perspective view of a wind turbine blade according to some embodiments.
FIG. 3 is a cross-sectional view (cross section S) taken from a spanwise region of the wind turbine blade illustrated in FIG. 2.
FIG. 4 is a cross sectional view of a flat-back airfoil according to another embodiment.
FIG. 5 is a diagram for describing the physical meaning of the second dimensionless value.
FIG. 6 is a chart illustrating a range of the first and second dimensionless values of airfoils according to some embodiments.
FIG. 7 is a chart illustrating the relationship between the lift coefficient and the attack angle.
FIG. 8 is a chart illustrating the relationship between the lift-drag ratio and the attack angle.
FIG. 9 is a chart illustrating the distribution of the chord length with respect to the dimensionless radial position r/R.
FIG. 10A is a graph where the x-axis indicates the second dimensionless value and the y-axis indicates the first dimensionless value.
FIG. 10B is a chart illustrating the impact on the design lift coefficient caused by the variation of the first dimensionless value.
FIG. 11A is a chart illustrating the variation of the second dimensionless value.
FIG. 11B is a chart illustrating the impact on the design lift coefficient caused by the variation of the second dimensionless value.
FIG. 12A is a graph where the x-axis indicates the second dimensionless value and the y-axis indicates the first dimensionless value.
FIG. 12B illustrates the impact on the design lift coefficient caused upon varying the second dimensionless value.
FIG. 13A illustrates the variation of the first dimensionless value.
FIG. 13B illustrates the impact on the design lift coefficient caused by the variation of the first dimensionless value.
FIG. 14 is a graph of the relationship between the power coefficient Cₚ and the dimensionless value of the optimum value of the product of the chord length and the lift coefficient.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

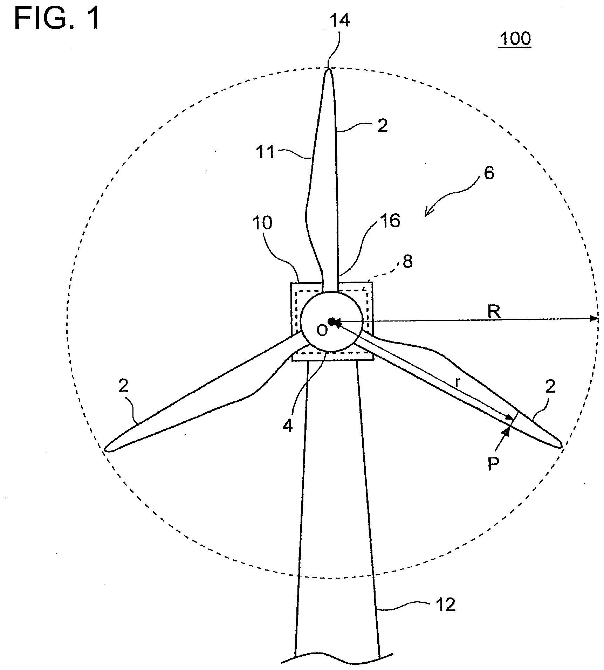

FIG. 1 is a configuration diagram of a wind turbine generator system 100 according to some embodiments.

The wind turbine generator system 100 illustrated in FIG. 1 includes a wind turbine rotor 6 including at least one wind turbine blade 2 and a hub 4 to which the wind turbine blade 2 is mounted, a generator 8 for converting the rotation energy of the wind turbine rotor 6 into electric energy, a nacelle 10 supporting the wind turbine rotor 6 and the generator 8, and a tower 12 supporting the nacelle 10 rotatably. The wind turbine rotor 6 exemplarily illustrated in FIG. 1 includes three wind turbine blades 2. The diameter of the wind turbine rotor 6 is not less than 100m in some embodiments, and not less than 150m in one embodiment. Further, in the present embodiment, the distance between the rotational center O of the wind turbine rotor 6 illustrated in FIG. 1 and a blade tip portion 14 of the wind turbine blade 2 is defined as the radius R of the wind turbine rotor 6, while a radial position "r" is defined as the position of a certain point P of the wind turbine rotor 6 (the distance between the point P and the rotational center O of the wind turbine rotor 6).

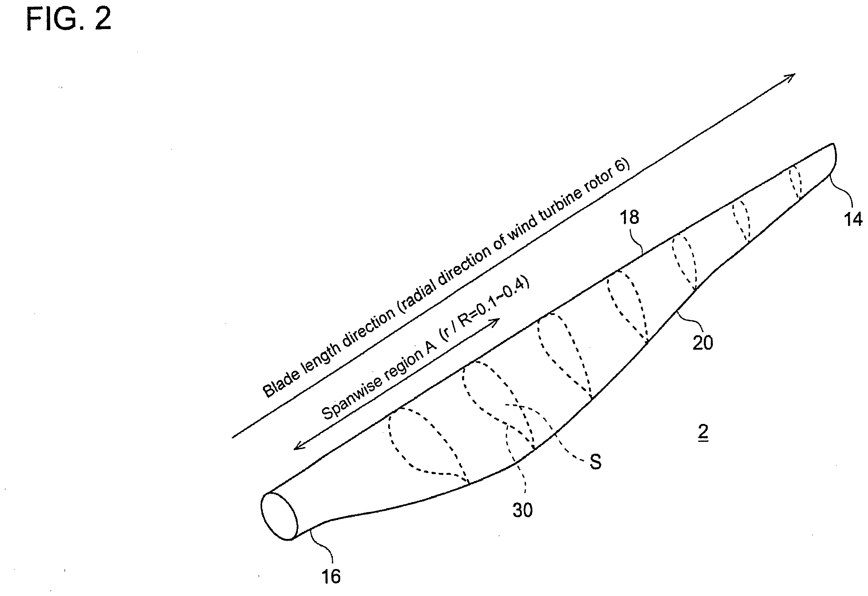

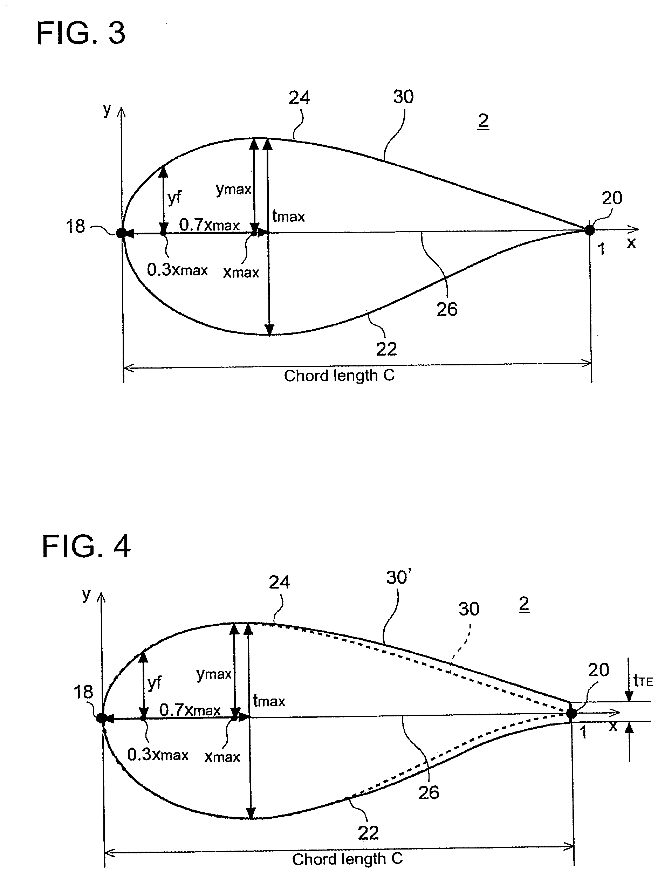

FIG. 2 is a schematic perspective view of the wind turbine blade 2 according to some embodiments. FIG. 3 is a cross-sectional view (cross section S) taken from a spanwise region A of the wind turbine blade 2 illustrated in FIG. 2.

As illustrated in FIGs. 2 and 3, the wind turbine blade 2 includes the blade tip portion 14, and a blade root portion 16 to be connected to the hub 4 (see FIG. 1). Further, the wind turbine blade 2 includes a leading edge 18 and a trailing edge 20 extending from the blade root portion 16 to the blade tip portion 14. Still further, the outer shape of the wind turbine blade 2 includes a pressure surface 22, and a suction surface 24 disposed opposite to the pressure surface 22.

In the embodiments, the trailing edge 20 is an intersection of the suction surface 24 and the pressure surface 22 forming an acute internal angle in a case where an airfoil 30 is not a flat-back airfoil. On the other hand, the trailing edge 20 is a middle point of the rear ends of the suction surface 24 and the pressure surface 22 in a case where an airfoil 30' is a flat-back airfoil. The leading edge 18 is a point having the longest distance from the trailing edge 20 defined above.

In some embodiments, the wind turbine blade 2 has the airfoil 30 satisfying the following conditions in the spanwise region A where the ratio r/R of the radial position r of the wind turbine rotor 6 to the radius R of the wind turbine rotor 6 is not less than 0.1 and not more than 0.4. In one embodiment, the airfoil 30 has a blade thickness ratio of not less than 0.35 and not more than 0.8, the blade thickness ratio indicating a ratio of the maximum blade thickness tₘₐₓ to the chord length C.

Referring to FIG. 3, terms used in the present embodiment will now be described. In FIG. 3, an x-coordinate indicates the direction along the chord 26 of the airfoil 30 and a y-coordinate indicates the thickness direction of the airfoil 30. Further in the drawing, the x-coordinate of the leading edge 18 is zero.

In the airfoil 30 illustrated in FIG. 3, the chord 26 is a line connecting the leading edge 18 and the trailing edge 20. The chord length C of the chord 26 is a length along the chord 26 from the leading edge 18 to the trailing edge 20. Further, the maximum value of the distance between the suction surface 24 and the pressure surface 22 in a direction orthogonal to the chord is the maximum blade thickness tₘₐₓ, and the maximum value of the distance between the chord 26 and the suction surface 24 in the direction orthogonal to the chord is the maximum upper (suction-side) thickness yₘₐₓ. Still further, the ratio yₘₐₓ/tₘₐₓ, which is the ratio of the maximum upper (suction-side) thickness yₘₐₓ being the maximum value of the distance to the suction surface 24 from the chord C connecting the leading edge 18 and the trailing edge 20 to the maximum blade thickness tₘₐₓ being the maximum value of the distance between the suction surface 24 and the pressure surface 22, is referred to as the first dimensionless value. This first dimensionless value is an indicator of the overall bulge of the airfoil 30 toward the suction surface.

Furthermore, a position in the chord direction where the airfoil 30 has the maximum upper (suction-side) thickness yₘₐₓ is defined by the distance xₘₐₓ being the distance from the leading edge 18 to this position in the chord direction. That is, an x-coordinate of a position in the chord direction having the maximum upper (suction-side) thickness yₘₐₓ is xₘₐₓ. Still further, a upper (suction-side) thickness y_{f} represents the distance in a direction orthogonal to the chord from the chord 26 to the suction surface 24 at a position in the chord direction at the distance of 0.3 xₘₐₓ from the leading edge 18. The ratio y_{f}/yₘₐₓ of the upper (suction-side) thickness y_{f} to the maximum upper (suction-side) thickness yₘₐₓ is referred to as the second dimensionless value. This second dimensionless value is an indicator of a local (in a range of from the leading edge 18 to the distance xₘₐₓ) bulge toward the suction surface of the airfoil 30 at the leading-edge side.

FIG. 4 is a cross sectional view of a flat-back airfoil 30' according to another embodiment. In the drawing, the airfoil 30 illustrated in FIG. 3 is indicated by dotted lines.

In this other embodiment, the airfoil 30' is a flat-back airfoil in which the trailing edge 20 has a thickness. The trailing edge 20 of the airfoil 30' has a trailing-edge thickness t_{TE}· Further, the chord 26 connecting the leading edge 18 and the trailing edge 20 (precisely, a middle point of the trailing edge surface in the direction of the blade thickness) has a chord length C.

The airfoil 30' has the same configuration as that of the airfoil 30 illustrated in FIG. 3 except for the trailing edge 20 having a thickness. Thus, detailed description will not be described herein.

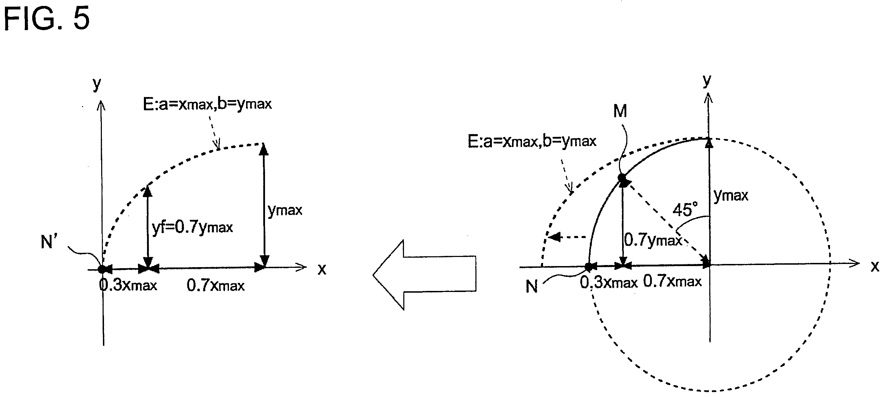

FIG. 5 is a diagram for describing the physical meaning of the second dimensionless value. As illustrated in the drawing, in a true circle having a radius of xₘₐₓ, an intersection M of the arc in the second quadrant and a straight line inclined by 45 degrees with respect to the y-axis has a y-coordinate of approximately 0.7 yₘₐₓ (precisely, sin 45° × yₘₐₓ ≒ 0.707 yₘₐₓ). Also, the intersection M is at a position away from a point N at which the arc intersects the x-axis by approximately 0.3 xₘₐₓ (precisely, cos 45° × xₘₐₓ ≒ 0.292 xₘₐₓ) in the x-axis direction. Thus, similarly in a partial ellipse having a long radius a (=xₘₐₓ) and a short radius b (=yₘₐₓ) illustrated on the left side of FIG. 5, the y-coordinate would be approximately 0.7 yₘₐₓ at a position away from an intersection N' of the partial ellipse and the x-axis by 0.3 xₘₐₓ in the x-axis direction. Thus, when the bulge is excessively large with respect to the ellipse, the second dimensionless value y_{f}/yₘₐₓ is likely to be larger than 0.7. On the other hand, when the bulge is excessively small with respect to the ellipse, the second dimensionless value y_{f}/yₘₐₓ is likely to be smaller than 0.7. As described above, by using the second dimensionless value y_{f}/yₘₐₓ as an indicator for evaluating the shape of the suction surface 24 at the leading edge side of the airfoil 30, 30', it is possible to represent the local (in a range of from the leading edge 18 to xₘₐₓ) bulge toward the suction surface of the airfoil 30, 30' at the leading edge side.

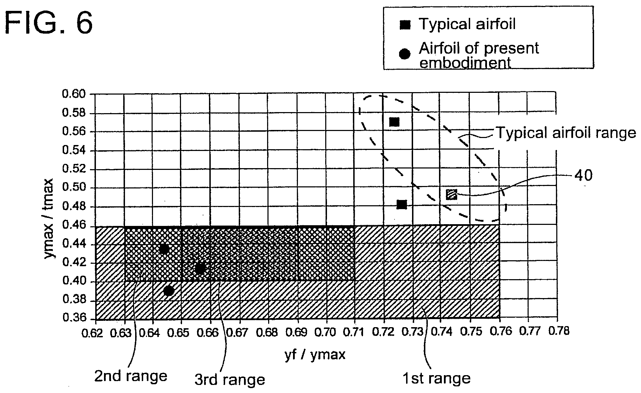

FIG. 6 illustrates a range of the first and second dimensionless values of the airfoil 30, 30' according to some embodiments.

The wind turbine blade 2 according to some embodiments has the airfoil 30, 30' satisfying all of the following conditions related to the first and second dimensionless values in the spanwise region A of the wind turbine blade 2 illustrated in FIG. 2.

In some embodiments, the airfoil 30, 30' has the first dimensionless value yₘₐₓ/tₘₐₓ of not less than 0.36 and not more than 0.46 and the second dimensionless value y_{f/}yₘₐₓ of not less than 0.62 and not more than 0.76. That is, a coordinate indicated by the first and second dimensionless values of the airfoil 30, 30' is within the first range illustrated in FIG. 6.

The above airfoil 30, 30' satisfying the above conditions related to the first and second dimensionless values has a high design lift coefficient CL_{design} according to the findings of the present inventors.

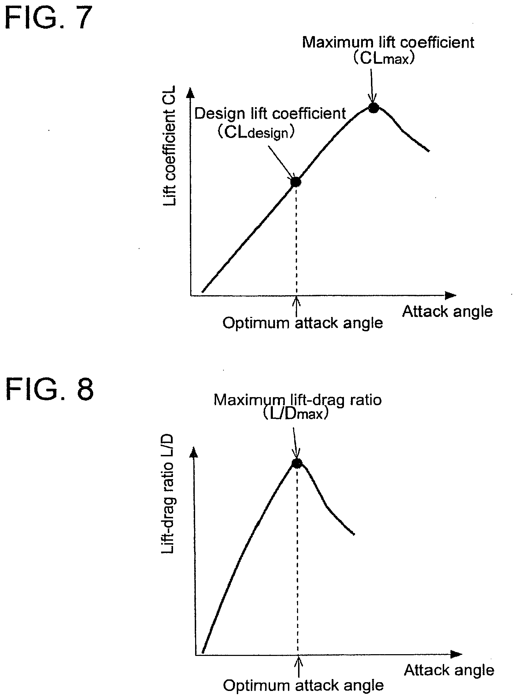

The design lift coefficient CL_{design} here is a lift coefficient corresponding to an optimum attack angle at which the maximum lift-drag ratio is achieved. This will be described in reference to FIGs. 7 and 8.

FIGs. 7 and 8 are diagrams for describing the design lift coefficient CL_{design}. FIG. 7 illustrates a relationship between a lift coefficient and an attack angle. FIG. 8 illustrates a relationship between a lift-drag ratio and an attack angle.

The design lift coefficient CL_{design} is a lift coefficient CL corresponding to an attack angle at which the lift-drag ratio reaches its maximum, which is the optimum attack angle illustrated in FIG. 8, in a relationship between the attack angle and the lift coefficient illustrated in FIG. 7. A typical variable-speed wind turbine is operated so as to achieve the optimum attack angle in the variable-speed operation. Thus, the design lift coefficient CL_{design} affects the performance of the wind turbine generator system 100 in the variable-speed operation.

In a typical variable-speed wind turbine, the attack angle becomes larger than the optimum attack angle in a wind speed range of the rated or higher wind speed. In this range, it is desirable to maintain the lift until the attack angle becomes large without losing the speed. The maximum lift coefficient CLₘₐₓ illustrated in FIG. 7 affects the performance of the wind turbine generator system in such a high wind speed range.

In the airfoil 30, 30', the ratio of the maximum upper (suction-side) thickness yₘₐₓ to the maximum blade thickness tₘₐₓ, which is the first dimensionless value, is set to 0.46 or less so as to restrict the overall bulge of the airfoil 30, 30' toward the suction surface. Also, the ratio of the upper (suction-side) thickness y_{f} to the maximum upper (suction-side) thickness yₘₐₓ, which is the second dimensionless value, is set to 0.76 or less so as to restrict the local (in a range of the leading edge to xₘₐₓ) bulge of the airfoil 30, 30' at the leading edge 18 side toward the suction surface. In this way, the overall bulge of the suction surface 24 and the local bulge of the suction-surface shape at the leading edge 18 side are restricted, so that the development of a boundary layer (a thickness, in a direction normal to the blade surface, of a region where the flow rate is low in the vicinity of the blade surface) along the suction surface 24 is retarded and separation from the suction surface 24 at the trailing edge 20 side (trailing edge separation) is restricted, which makes it possible to improve the lift. Thus, the airfoil 30, 30' can achieve a high design lift coefficient CL_{design} and the maximum lift coefficient CLₘₐₓ.

Further, in the airfoil 30, 30', the ratio of the maximum upper (suction-side) thickness yₘₐₓ to the maximum blade thickness tₘₐₓ, which is the first dimensionless value, is set to 0.36 or more so as to ensure the overall bulge of the airfoil 30, 30' toward the suction surface to a certain extent. Also, the ratio of the upper (suction-side) thickness y_{f} to the maximum upper (suction-side) thickness yₘₐₓ, which is the second dimensionless value, is set to 0.62 or more so as to ensure the local (in a range of the leading edge to xₘₐₓ) bulge of the airfoil 30, 30' toward the suction surface at the leading edge 18 side to a certain extent. In this way, since the overall bulge of the suction surface 24 and the local bulge of the suction-surface shape at the leading edge 18 side are ensured to a certain extent, it is possible to restrict reduction of the lift due to the influence from separation immediately downstream the stagnating point (the leading edge separation).

As described above, the airfoil 30, 30' of the wind turbine blade 2 meets the above conditions related to the first and second dimensionless values and thus has a high design lift coefficient CL_{design} and the maximum lift coefficient CLₘₐₓ.

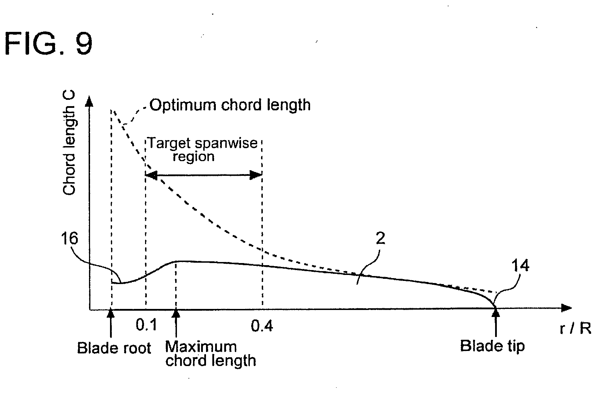

Meanwhile, limitations are likely to be set on the chord length in the spanwise region A where the ratio of the radial position r of the wind turbine rotor 6 to the radius R of the wind turbine rotor 6 is not less than 0.1 and not more than 0.4. This will be described below in reference to FIG. 9.

FIG. 9 illustrates a distribution of the chord length with respect to a dimensionless radial position A (= r/R). As illustrated in the drawing, a typical wind turbine blade has the maximum chord length C within or in the vicinity of the spanwise region A, where 0.1 ≤ r/R ≤ 0.4. Assuming that the design lift coefficient CL_{design} is constant, the dimensionless radial position r/R and the chord length C need to have an inversely proportional relationship as indicated by the dotted line in FIG. 9 in order to achieve the optimum aerodynamic performance. In a typical wind turbine, the chord length C is short with respect to the distribution of the optimum chord length indicated by the dotted line in FIG. 9 in a region in the vicinity of the position of the maximum chord length. This is due to the limitation set on the chord length for solving various problems associated with the increasing length of the wind turbine blade, such as the increasing weight of the wind turbine blade, reduction of the manufacturability and transportability of the wind turbine, and the operability of the wind turbine generator system.

As described above, in a spanwise region where the ratio of the radial position r of the wind turbine rotor 6 to the radius R of the wind turbine rotor 6 is not less than 0.1 and not more than 0.4, the chord length C is likely to be short with respect to the distribution of the optimum chord length as a result of the likely limitation set on the chord length C.

In this regard, the wind turbine blade 2 according to the present invention includes the airfoil 30, 30' having the advantageous design lift coefficient CL_{design} as described above in the spanwise region A satisfying 0.1 ≤ r/R ≤ 0.4 (target spanwise region A), which makes it possible to restrict reduction of the aerodynamic performance due to the shortage of the chord length C with respect to the distribution of the optimum chord length.

In some embodiments, the airfoil 30, 30' has the first dimensionless value yₘₐₓ/tₘₐₓ of not less than 0.4 and not more than 0.46, and the second dimensionless value y_{f}/yₘₐₓ of not less than 0.63 and not more than 0.71. That is, coordinates indicated by the first and second dimensionless values of the airfoil 30, 30' are included in the second range illustrated in FIG. 6.

Further, in one embodiment, the airfoil 30, 30' has the second dimensionless value y_{f}/yₘₐₓ of not less than 0.65 and not more than 0.69. That is, coordinates indicated by the second dimensionless value of the airfoil 30, 30' are included in the third range illustrated in FIG. 6.

When the first and second dimensionless values are set within the above value ranges, the overall bulge of the suction surface 24 and the local bulge of the suction-surface shape at the leading edge 18 side become even more preferable, thereby effectively restricting the trailing edge separation and the leading edge separation, which makes it possible to increase the design lift coefficient CL_{design} of the airfoil 30, 30'.

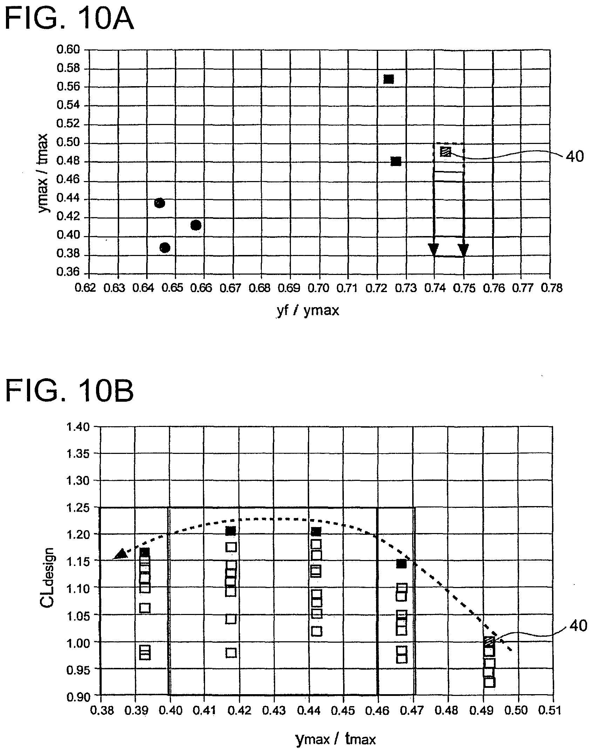

Now, referring to FIGs. 10 to 13, the progression will be described about the study of the present inventors, from which they have finally found that the above conditions of the first and second dimensionless values contribute to improvement of the design lift coefficient of the airfoil 30, 30'.

FIG. 10A is a graph where the x-axis indicates the second dimensionless value and the y-axis indicates the first dimensionless value. In the drawing, a point 40 represents an airfoil of a typical wind turbine blade having a blade thickness ratio of 40% (hereinafter, referred to as a reference airfoil). FIG. 10B illustrates an impact on the design lift coefficient when the first dimension less value is varied in a direction in which the first dimensionless value becomes smaller than the reference airfoil 40, as illustrated in FIG. 10A. As illustrated in FIG. 10B, there was found a range of the first dimension less value where the design lift coefficient CL_{design} becomes high as compared to the reference airfoil 40. It was revealed that the design lift coefficient CL_{design} remarkably improves as compared to the reference example 40 particularly in a range where the first dimensionless value is 0.38 ≤ yₘₐₓ/tₘₐₓ ≤ 0.47. Further, it was also revealed that the design lift coefficient CL_{design} reaches its maximum value within a range where the first dimensionless value is 0.40 ≤ yₘₐₓ/tₘₐₓ ≤ 0.46 under this calculation condition.

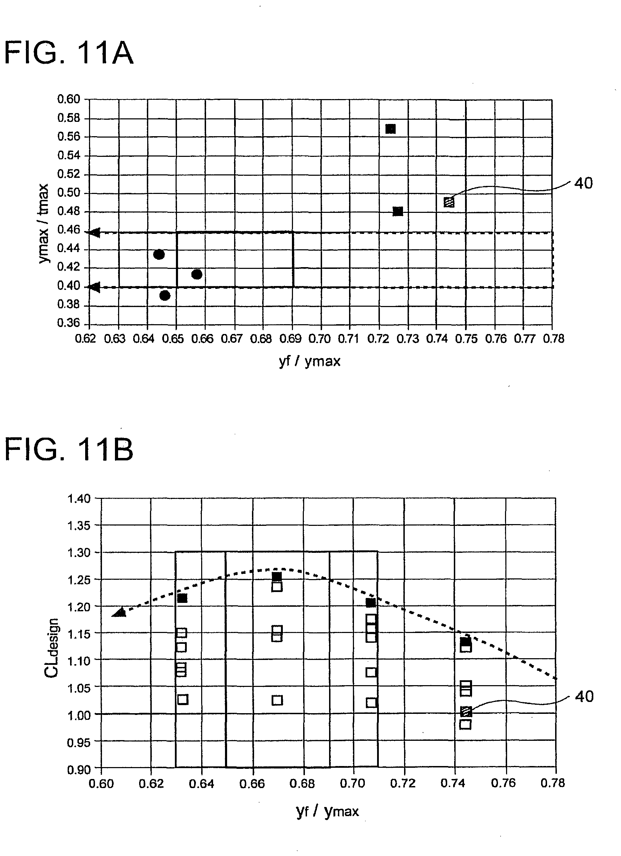

Subsequently, FIG. 11A illustrates the second dimensionless value being varied in a direction in which the second dimensionless value becomes smaller than the reference airfoil 40, in the above range of the first dimensionless value (0.40 ≤ yₘₐₓ/tₘₐₓ 0.46). FIG. 11B illustrates an impact on the design lift coefficient caused by the variation of the second dimensionless value. As illustrated in the drawing, there was found a range of the second dimensionless value where the design lift coefficient CL_{design} is improved. The design lift coefficient CL_{design} remarkably improves as compared to the reference example 40 particularly in a range where the second dimensionless value is 0.63 ≤ y_{f}/yₘₐₓ ≤ 0.71. Further, it was also revealed that the design lift coefficient CL_{design} reaches its maximum value within a range where the second dimensionless value satisfies 0.65 ≤ y_{f}/yₘₐₓ ≤ 0.69 under this calculation condition.

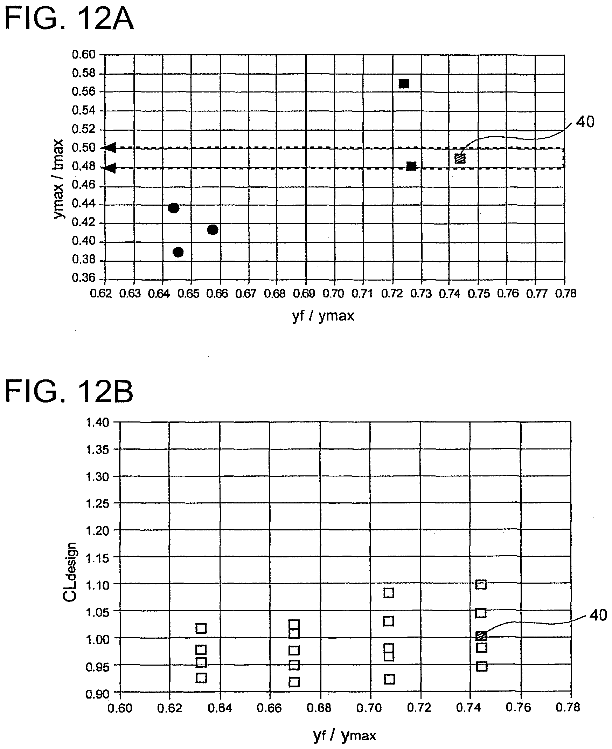

On the other hand, FIG. 12A is a graph where the x-axis indicates the second dimensionless value and the y-axis indicates the first dimensionless value. In the drawing, the point 40 represents the above mentioned reference airfoil. FIG. 12B illustrates an impact on the design lift coefficient when the second dimensionless value is varied in a direction in which the second dimensionless value becomes smaller than the reference airfoil 40 as illustrated in FIG. 12A. As illustrated in FIG. 12B, it was not possible to find an evident range of the second dimensionless value where the design lift coefficient CL_{design} is improved.

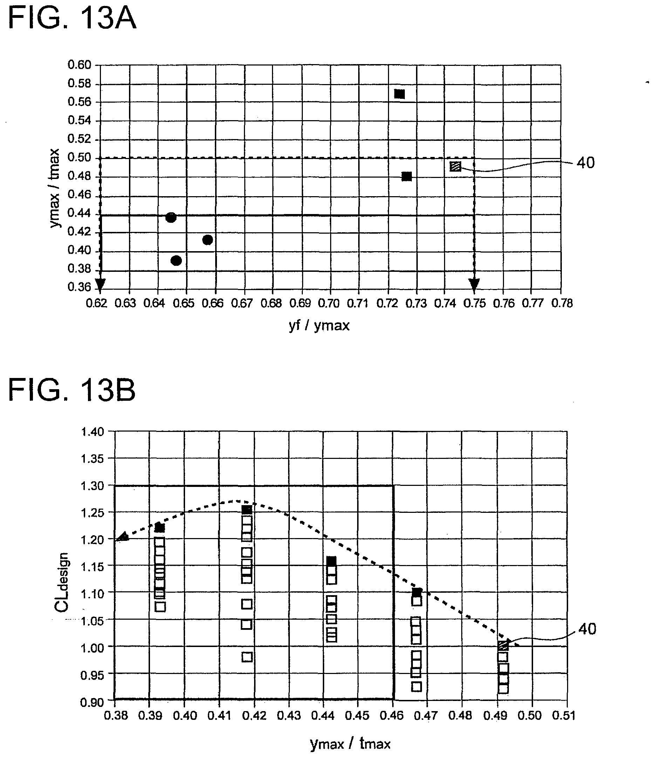

Thus, the first dimensionless values is varied in a direction in which the first dimensionless value becomes smaller than the reference airfoil 40 in a wide range of the second dimensionless value (0.62 ≤ y_{f}/yₘₐₓ ≤ 0.75), as illustrated in FIG. 13A. FIG. 13B illustrates an impact on the design lift coefficient caused by the variation of the first dimensionless value. As illustrated in the drawing, there was found a range of the first dimensionless value where the design lift coefficient CL_{design} is improved. The design lift coefficient CL_{design} is remarkably improved as compared to the reference airfoil 40 in a range where the first dimensionless value is 0.38 ≤ yₘₐₓ/tₘₐₓ ≤ 0.46.

From the progression of the study of the present inventors, it was revealed that the above conditions of the first and second dimensionless values in the present embodiment can contribute to increase the design lift coefficient.

As described above, according to the above embodiment, it is possible to achieve a high design lift coefficient CL_{design} and the maximum lift coefficient CLₘₐₓ by the airfoil 30, 30' of the wind turbine blade 2 satisfying the above conditions related to the first and second dimensionless values. Further, when the wind turbine blade 2 includes the airfoil 30, 30' having the advantageous design lift coefficient CL_{design} and maximum lift coefficient CLₘₐₓ in the spanwise region A, it is possible to increase the advantageous design lift coefficient CL_{design} and maximum lift coefficient CLₘₐₓ in a region in the vicinity of a position in the chord direction at which the airfoil 30, 30' is employed, which makes it possible to improve the aerodynamic performance of the wind turbine blade 2.

Further, employing the flat-back airfoil (see FIG. 4) so that the trailing edge 20 has a thickness in a region relatively close to the blade root portion 16 side makes it possible to avoid a decrease in the speed until achieving a large attack angle, thereby improving the maximum lift coefficient CLₘₐₓ. That is, since the airfoil 30' is a flat-back airfoil in the spanwise region where the ratio of the radial position r is not less than 0.1 and not more than 0.4, it is possible to effectively retard the separation of the boundary layer on the suction surface 24 thanks to the negative pressure generated by the wake at the downstream side of the trailing edge 20.

Embodiments of the present invention were described in detail above, but the present invention is not limited thereto, and various amendments and modifications may be implemented within a scope that does not depart from the present invention.

## Claims

1. A wind turbine rotor (6), comprising:
a plurality of wind turbine blades (2) each including a suction surface (24) and a pressure surface (22) arranged opposite to each other, and
a hub (4) to which each of the plurality of wind turbine blades (2) is mounted,
wherein, around a location such that a chord length (C) of each of the wind turbine blades (2) is maximized which is included within a spanwise region (A) of the wind turbine blade (2) where a ratio of a radial position r of the wind turbine rotor (6) to a radius R of the wind turbine rotor (6) is not less than 0.1 and not more than 0.4, and within said spanwise region (A), each of the wind turbine blades (2) includes an airfoil (30; 30') having a first dimensionless value yₘₐₓ/tₘₐₓ of not less than 0.4 and not more than 0.46 and a second dimensionless value y_{f}/yₘₐₓ of not less than 0.63 and not more than 0.71,
where:
the first dimensionless value yₘₐₓ/tₘₐₓ is a ratio of a maximum upper (suction-side) thickness yₘₐₓ being a maximum value of a distance between a chord (26) and the suction surface (24) to a maximum blade thickness tₘₐₓ being a maximum value of a distance between the suction surface (24) and the pressure surface (22); and
the second dimensionless value y_{f}/yₘₐₓ is a ratio of a upper (suction-side) thickness y_{f} to the maximum upper (suction-side) thickness yₘₐₓ, the upper (suction-side) thickness y_{f} being a distance between the chord (26) and the suction surface (24) at a position in the chord direction at a distance of 0.3 xₘₐₓ from a leading edge (18) when defining a position in the chord direction having the maximum upper (suction-side) thickness yₘₐₓ as being at a distance xₘₐₓ between the leading edge (18) and the position in the chord direction having the maximum upper (suction-side) thickness yₘₐₓ; and
a diameter of the wind turbine rotor (6) is not less than 100 m.

2. The wind turbine rotor according to claim 1,
wherein the second dimensionless value y_{f}/yₘₐₓ is not less than 0.65 and not more than 0.69.

3. The wind turbine rotor according to claim 1 or 2,
wherein the airfoil (30') is a flat-back airfoil which includes a trailing edge (20) having a thickness (t_{TE}).

4. The wind turbine rotor according to any one of claims 1 to 3,
wherein the airfoil (30; 30') of the wind turbine blade (2) has a blade thickness ratio of not less than 0.35 and not more than 0.8 indicating a proportion of the maximum blade thickness tₘₐₓ to a length C of the chord.

5. The wind turbine rotor according to any one of claims 1 to 4,
wherein, in said spanwise region (A) where a ratio of a radial position r of the wind turbine rotor (6) to a radius R of the wind turbine rotor (6) is not less than 0.1 and not more than 0.4, the airfoil (30; 30') has a blade thickness ratio not less than 0.35 and not more than 0.8 indicating a proportion of the maximum blade thickness tₘₐₓ to a length C of the chord.

6. A wind turbine generator system (100) comprising:
the wind turbine rotor (6) according to any one of claims 1 to 4; and
a generator (8) for converting rotation energy of the wind turbine rotor (6) into electric energy.

## Patentansprüche

1. Windturbinenrotor (6), umfassend:
mehrere Windturbinenrotorblätter (2), von denen jedes eine Saugoberfläche (24) und eine Druckoberfläche (22), die einander entgegengesetzt angeordnet sind, umfasst, und
eine Nabe (4), an der jedes der mehreren Windturbinenblätter (2) angebracht ist,
wobei um eine Position, derart, dass eine Sehnenlänge (C) von jedem der Windturbinenrotorblätter (2) maximiert ist, welche innerhalb eines Spannweitenbereichs (A) des Windturbinenrotorblatts (2) enthalten ist, wo ein Verhältnis einer radialen Position r des Windturbinenrotors (6) zu einem Radius R des Windturbinenrotors (6) nicht kleiner als 0,1 ist und nicht größer als 0,4 ist, und innerhalb des besagten Spannweitenbereichs (A), jedes der Windturbinenblätter (2) ein Profil (30; 30') mit einem ersten dimensionslosen Wert yₘₐₓ/tₘₐₓ, der nicht kleiner als 0,4 und nicht größer als 0,46 ist, und einem zweiten dimensionslosen Wert y_{f}/yₘₐₓ, der nicht kleiner als 0,63 und nicht größer als 0,71 ist, umfasst, wobei:
der erste dimensionslose Wert yₘₐₓ/tₘₐₓ ein Verhältnis einer maximalen oberen (saugseitigen) Dicke yₘₐₓ, die ein Maximalwert eines Abstands zwischen einer Sehne (26) und der Saugoberfläche (24) ist, zu einer maximalen Rotorblattdicke tₘₐₓ, die ein Maximalwert eines Abstands zwischen der Saugoberfläche (24) und der Druckoberfläche (22) ist, ist, und
der zweite dimensionslose Wert y_{f}/yₘₐₓ ein Verhältnis einer oberen (saugseitigen) Dicke y_{f} zu der maximalen oberen (saugseitigen) Dicke yₘₐₓ ist, wobei die obere (saugseitige) Dicke y_{f} ein Abstand zwischen der Sehne (26) und der Saugoberfläche (24) an einer Position in der Sehnenrichtung in einem Abstand von 0,3 xₘₐₓ von einer Vorderkante (18) ist, wenn eine Position in der Sehnenrichtung, welche die maximale obere (saugseitige) Dicke yₘₐₓ aufweist, als in einem Abstand xₘₐₓ zwischen der Vorderkante (18) und der Position in der Sehnenrichtung, welche die maximale obere (saugseitige) Dicke yₘₐₓ aufweist, definiert wird, und
ein Durchmesser des Windturbinenrotors (6) nicht kleiner als 100 m ist.

2. Windturbinenrotor nach Anspruch 1,
wobei der zweite dimensionslose Wert y_{f}/yₘₐₓ nicht kleiner als 0,65 und nicht größer als 0,69 ist.

3. Windturbinenrotor nach Anspruch 1 oder 2,
wobei das Profil (30') ein Flachrückenprofil ist, das eine Vorderkante (20) mit einer Dicke (t_{TE}) umfasst.

4. Windturbinenrotor nach einem beliebigen der Ansprüche 1 bis 3,
wobei das Profil (30; 30') des Windturbinenrotorblatts (2) ein Blattdickenverhältnis von nicht kleiner als 0,35 und nicht größer als 0,8 aufweist, was eine Proportion der maximalen Rotorblattdicke tₘₐₓ zu einer Länge C der Sehne angibt.

5. Windturbinenrotor nach einem beliebigen der Ansprüche 1 bis 4,
wobei in dem Spannweitenbereich (A), wo ein Verhältnis einer radialen Position r des Windturbinenrotors (6) zu einem Radius R des Windturbinenrotors (6) nicht kleiner als 0,1 und nicht größer als 0,4 ist, das Profil (30; 30') ein Rotorblattdickenverhältnis von nicht kleiner als 0,35 und nicht größer als 0,8 aufweist, was eine Proportion der maximalen Rotorblattdicke tₘₐₓ zu einer Länge C der Sehne angibt.

6. Windkraftanlage (100), umfassend:
den Windturbinenrotor (6) nach einem beliebigen der Ansprüche 1 bis 4, und
einen Generator (8) zum Umwandeln von Rotationsenergie des Windturbinenrotors (6) zu elektrischer Energie.

## Revendications

1. Rotor d'éolienne (6), comportant :
une pluralité de pales d'éolienne (2) comprenant une surface de dépression (24) et une surface de pression (22) disposées à l'opposé l'une de l'autre, et
un moyeu (4) sur lequel chaque pale de la pluralité de pales d'éolienne (2) est montée,
dans lequel, autour d'un emplacement de telle sorte qu'une longueur de corde (C) de chacune des pales d'éolienne (2) est maximisée qui est inclus dans une zone dans le sens de l'envergure (A) de la pale d'éolienne (2) où un rapport d'une position radiale r du rotor d'éolienne (6) sur un rayon R du rotor d'éolienne (6) n'est pas inférieur à 0,1 et pas supérieur 0,4, et dans ladite zone dans le sens de l'envergure (A), chacune des pales d'éolienne (2) comprend un profil (30 ; 30') ayant une première valeur sans dimension yₘₐₓ/tₘₐₓ de pas moins de 0,4 et pas plus de 0,46 et une deuxième valeur sans dimension y_{f}/yₘₐₓ de pas moins de 0,63 et pas plus de 0,71,
où :
la première valeur sans dimension yₘₐₓ/tₘₐₓ est un rapport d'une épaisseur supérieure maximale (du côté dépression) yₘₐₓ qui est une valeur maximale d'une distance entre une corde (26) et la surface de dépression (24) sur une épaisseur de pale maximale tₘₐₓ qui est une valeur maximale d'une distance entre la surface de dépression (24) et la surface de pression (22) ; et
la deuxième valeur sans dimension y_{f}/yₘₐₓ est un rapport d'une épaisseur supérieure (du côté dépression) y_{f} sur l'épaisseur supérieure maximale (du côté dépression) yₘₐₓ, l'épaisseur supérieur y_{f} (du côté dépression) étant une distance entre la corde (26) et la surface de dépression (24) dans une position dans la direction de corde à une distance de 0,3 xₘₐₓ d'un bord d'attaque (18) lorsque l'on définit une position dans la direction de corde ayant l'épaisseur supérieure maximale (du côté dépression) yₘₐₓ comme étant à une distance xₘₐₓ entre le bord d'attaque (18) et la position dans la direction de corde ayant l'épaisseur supérieure maximale (du côté dépression) yₘₐₓ ; et
un diamètre du rotor d'éolienne (6) n'est pas inférieur à 100 m.

2. Rotor d'éolienne selon la revendication 1, dans lequel la deuxième valeur sans dimension y_{f}/yₘₐₓ n'est pas inférieure à 0,65 et pas supérieure à 0,69.

3. Rotor d'éolienne selon la revendication 1 ou 2, dans lequel le profil (30') est un profil à arrière plat qui comprend un bord de fuite (20) ayant une épaisseur (f_{TE}).

4. Rotor d'éolienne selon l'une quelconque des revendications 1 à 3, dans lequel le profil (30 ; 30') de la pale d'éolienne (2) a un rapport d'épaisseur de pale de pas moins de 0,35 et pas plus de 0,8 indiquant une proportion de l'épaisseur de pale maximale tₘₐₓ sur une longueur C de la corde.

5. Rotor d'éolienne selon l'une quelconque des revendications 1 à 4, dans lequel, dans ladite zone dans le sens de l'envergure (A) où un rapport d'une position radiale r du rotor d'éolienne (6) sur un rayon R du rotor d'éolienne (6) n'est pas inférieur à 0,1 et pas supérieur à 0,4, le profil (30 ; 30') a un rapport d'épaisseur de pale de pas moins de 0,35 et pas plus de 0,8 indiquant une proportion de l'épaisseur de pale maximale tₘₐₓ sur une longueur C de la corde.

6. Système de génératrice d'éolienne (100) comportant :
le rotor d'éolienne (6) selon l'une quelconque des revendications 1 à 4 ; et
une génératrice (8) destinée à convertir une énergie de rotation du rotor d'éolienne (6) en énergie électrique.
